# EUROPEAN PATENT SPECIFICATION

(11) **EP 2 067 560 B1**
(45) Date of publication and mention of the grant of the patent: **21.03.2012**
(21) Application number: 07850351.3
(22) Date of filing: 10.12.2007
(51) Int. Cl.: B23H 7/08, C23C 2/06

(54) **SYSTEM FOR MANUFACTURING A BASE WIRE FOR AN ELECTRODE WIRE FOR WIRE ELECTRODISCHARGE MACHINING**
SYSTEM ZUR HERSTELLUNG EINES ELEKTRODENDRAHTES ZUR ELEKTRISCHEN DRAHTENTLADUNG
SYSTÈME POUR LA FABRICATION D'UN FIL ÉLECTRODE DE BASE POUR DÉCHARGE ÉLECTRIQUE PAR FIL

(43) Date of publication of application: 10.06.2009
(73) Proprietor: Oki Electric Cable Co., Ltd., Kawasaki-shi Kanagawa 211-8585 (JP)
(72) Inventor: SATO, Hiroshi, Kawasaki-shi Kanagawa 211-8585 (JP); IZUI, Isao, Kawasaki-shi Kanagawa 211-8585 (JP); WASHIO, Nobuyuki, Kawasaki-shi Kanagawa 211-8585 (JP); FUJIOKA, Nobutaka, Kawasaki-shi Kanagawa 211-8585 (JP); YOSHIMOTO, Masakazu, Kawasaki-shi Kanagawa 211-8585 (JP)
(74) Representative: Ward, James Norman
(86) International application number: PCT/JP2007/073783
(87) International publication number: WO 2009/028117

(56) References cited:
- EP-A- 0 811 701
- CH-A5- 655 265
- DE-A1- 2 733 075
- JP-A- 47 021 339
- JP-A- 59 041 462
- JP-A- 59 110 516
- JP-A- 61 008 228
- JP-A- 2002 088 460
- JP-A- 2002 137 123
- JP-A- 2003 039 246
- JP-A- 2003 213 392
- JP-A- 2004 082 246
- US-A1- 2006 138 091

## Description

### TECHNICAL FIELD

The present invention relates to a system for manufacturing a base wire for an electrode wire according to the preamble of claim 1. Such a system is known from CH655265.

### BACKGROUND OF THE INVENTION

Wire electrodischarge machining is a technique for cutting a workpiece using a thermal energy produced by electric discharge between the electrode wire and the workpiece and is particularly suitable for metalworking for producing metal molds or other intricate-shaped items.
This type of electrodischarge machining must meet several requirements including: a. fast machining speed; b. reduced amount of metal powder generated by continuous run of the electrode wire; c. good surface finish and dimensional accuracy of the workpiece; and d. good positionability for determining the position of the electrode wire relative to the workpiece.

A conventional electrode wire that has been widely used for this type of machining is a non-layered solid brass wire with a zinc concentration of 35-40 weight %.
This brass electrode wire has a limitation in the machining speed because it is impossible to increase the zinc content.
Various studies have been conducted to achieve an electric discharge machining speed higher than that with the brass electrode wire. It is well known that a higher zinc concentration in the electrode wire provides a higher machining speed.
These studies for increasing the machining speed are broadly grouped in two approaches: increasing the zinc concentration in the brass composition of the electrode wire to 40 weight % or more; and providing a copper-zinc alloy layer of zinc concentration of at least 40 weight % or pure zinc layer on the surface of the electrode wire.

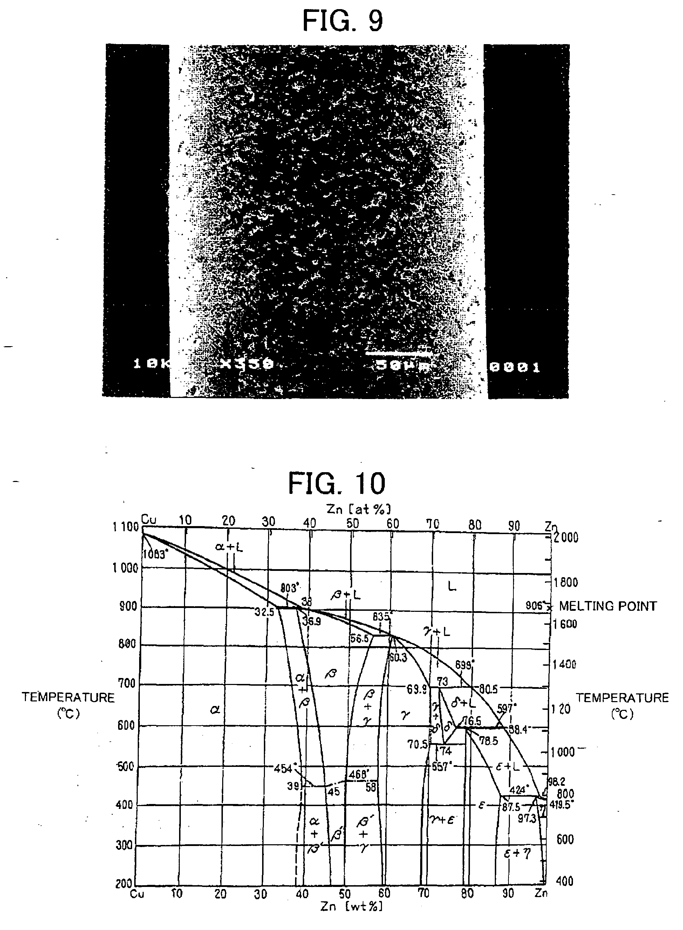

JP3303296B2 discloses the first approach, i.e., increasing the zinc concentration in the brass composition of the electrode wire to 40 mass % or more. This copper zinc alloy has a problem, however, when being manufactured into a fine wire. As shown in the binary alloy phase diagram in FIG. 10, this alloy includes α, β, γ, ε, and η solid solutions, among which only the a phase having the maximum solid solubility of zinc of approximately 39 weight % can be cold drawn for practical application and β and other phases are brittle and cracked when cold drawn.
To solve this problem, this invention adds zirconium or other metal to fragment the β phase and thus improve drawability, which results in a multicomponent alloy containing copper, zinc, and other metal and increases the cost of manufacturing.

JP3718617B2 discloses a porous electrode wire having on its surface a copper-zinc alloy layer of zinc concentration of at least 40 weight % or a pure zinc layer.
This porous electrode wire has a copper-zinc alloy layer or a zinc layer formed by hot-dip galvanizing a copper-containing core and drawn to intentionally crack its surface, so that the surface area of the electrode wire to be brought into contact with the machining liquid during electrodischarge machining is increased and the electrode wire is more quickly cooled to improve the machining speed.

Cracks on the surface of the electrode wire, however, cause the following problems:
a. Since wire electrodischarge machining is jigsaw-type machining and thermally saws a workpiece by electrical discharge between the electrode wire and the workpiece, the cracks on the surface of the electrode wire unstabilizes the electrical discharge and yields a poor surface finish of the workpiece;
b. Such a brittle surface as is cracked when cold drawn generates a significant amount of metal powder by friction or chafing against guides and pulleys in the machine during continuously run of the electrode wire during machining and worsens maintainability;
c. The cracked surface of the electrode wire decreases positioning accuracy, because the wire electrodischarge machine cannot accurately determine the position of the electrode wire relative to the workpiece due to unstable continuity between them; and
d. The cracked surface decreases reliability of the electrode wire because the wire is likely to break during handling or machining.

JP3602402B2 discloses a wire electrode for electrodischarge machining having on its surface a copper-zinc alloy layer of zinc concentration of at least 40 weight % and a zinc layer.
This wire electrode has a conductive core that mainly receives tension and a coating that includes two layers and wears during erosion. The inner layer has a thickness of at least 2.5 µm and is made of a substantially homogeneous alloy, containing 40-48 weight % zinc for high-speed cutting. The outer layer has a thickness of 0.5-5 µm and contains 80-100 weight % zinc for precision cutting. The thickness of the outer layer is within one fifth the thickness of the inner layer.

This electrode wire, however, would be cracked when cold drawn and causes problems similar to those described in JP3718617B2 described above, because its outer layer containing at maximum 100 weight % zinc is extremely thin compared with the brittle copper-zinc alloy layer containing 40-48 weight % zinc.

JP3405069B2 discloses a method of manufacturing an electrode wire having two copper-zinc alloy layers, i.e., including inner β phase layer and outer α phase layer, to prevent cracking on the surface when cold drawn.
This method, however, increases the cost of manufacturing due to complicated processes, because a slurry mainly containing zinc powder is first applied, dried, and heat-treated, then another slurry containing zinc powder of lower zinc concentration is applied, dried, and heat-treated, before cold wire-drawing.
CH655265 discloses a method of and a system for producing a coated electrode filamentary for machining by electroerosion. The method involves coating operations and drawing. The coating operation is a high-speed hot coating process, which enables the drawing of the coated wire due to the non-formation of intermetallic compounds at the interface between the core and coating.
DE 2733075 discloses a carbon steel core coated by a hot-dip galvanised layer of zinc and a stainless steel core coated by a hot-dip galvanised layer of a zinc alloy.
US 2006/0138091 discloses a method of manufacturing a zinc-coated electrode wire using a hot dip galvanising process.
EP 0811701 discloses a method for producing at a high speed an EDM electrode wire with a surface layer of great thickness of a diffused alloy.
JP 61008228 discloses a method for preparing a composite electrode wire having a superior electric discharge characteristic. The electrode wire has a brass core with a ZN alloy coating.
JP 59041462 discloses a method of preparing a composite electrode wire for discharge machining.
JP 59110516 discloses an electrode wire for wire-cut electric discharge machining and a method of manufacturing the wire.
US 6566622 discloses a wire electrode for use in spark-erosive cutting and having an electrically conducting core which essentially absorbs the tensile forces.

### DISCLOSURE OF THE INVENTION

As described above, conventional electrode wires for high-speed wire electrodischarge machining can indeed improve the machining speed, but they worsen other characteristics for electrodischarge machining (JP3718617B2 and JP3602402B2) or increase the cost of manufacturing (JP3303296B2 and JP3405069B2).
The present invention aims at solving these problems by providing an electrode wire for electrodischarge machining that can be manufactured without complicated processes and with no cracks on its surface.
It is desirable to provide an electrode wire for electrodischarge machining that provides a higher machining speed, improves the surface roughness of the workpiece, reduces the amount of metal powder generated during continuously run of the electrode wire, provides good positionability for determining the position of the electrode wire relative to the workpiece, and does not break during handling or machining.
An object of the present invention is to provide a system for manufacturing the above electrode wire for electrodischarge machining.
A system for manufacturing a base wire for an electrode wire is defined in the independent claim.

In the embodiments, the electrode wire can be manufactured without complicated processes and with no cracks on its surface. This ensures a higher electric discharge machining speed and an extremely improved surface roughness of the workpiece.
Furthermore, the amount of metal powder generated by continuously run of the electrode wire is reduced, so the electrode wire can be accurately positioned relative to the workpiece and resist breakage during handling or machining with higher reliability.

In the embodiments, a thick pure zinc layer can be formed and accordingly an electrode wire with no cracks on its surface can be manufactured.
By blowing the non-oxidizing gas on the bath surface through which the core emerges from the hot-dip galvanizing bath, a layer of impurities including oxide films or products of reaction with flux can be removed and the pure zinc bath surface can be kept exposed, so a pure zinc layer can be formed on the core.
By performing a wiping process, runs and uneven thickness of the pure zinc layer can be prevented, and cracking on the surface of the electrode wire can also be prevented during cold wire-drawing.

Further, a pure zinc layer can easily be formed on the base wire and electrode wire for electrodischarge machining, by disposing the jet blower with its jet tip facing the surface of the hot-dip galvanizing bath through which the core emerges from the bath and blowing the non-oxidizing gas through the jet tip on the bath surface to remove the layer of impurities including oxide films and products of reaction with flux and keep exposed the pure zinc bath surface.
By forcing the non-oxidizing gas to pass at high pressure around the core in the direction opposite to the direction in which the core is taken up, the galvanizing layer can be controlled to make uniform the thickness of the galvanizing layer and prevent decentering of the core.

### BRIEF DESCRIPTION OF THE DRAWINGS

FIG. 1 is a sectional view showing an electrode wire made using a system of the present invention;
FIG. 2 shows the zinc concentration in the radial direction of the electrode wire;
FIG. 3 shows a hot-dip galvanizing device;
FIG. 4 is an enlarged view of a bath surface zinc purifying and wiping device;
FIG. 5 is an optical microphotography of 1000 magnifications of a cross section of the galvanized brass core of example No. 2:
FIG. 6 is an optical microphotography of 1000 magnifications of a cross section of the electrode wire of the example No. 2;
FIG. 7 is a scanning electron micrograph (SEM) of 350 magnifications of a surface of the electrode wire of example No. 2;
FIG. 8 is an optical microphotography of 1000 magnifications of a cross section of the electrode wire of comparative example No. 1;
FIG. 9 is a scanning electron micrograph (SEM) of 350 magnifications of a surface of the electrode wire of comparative example No. 1; and
FIG. 10 shows a copper-zinc binary alloy state.

### BEST MODE OF PRACTICING THE INVENTION

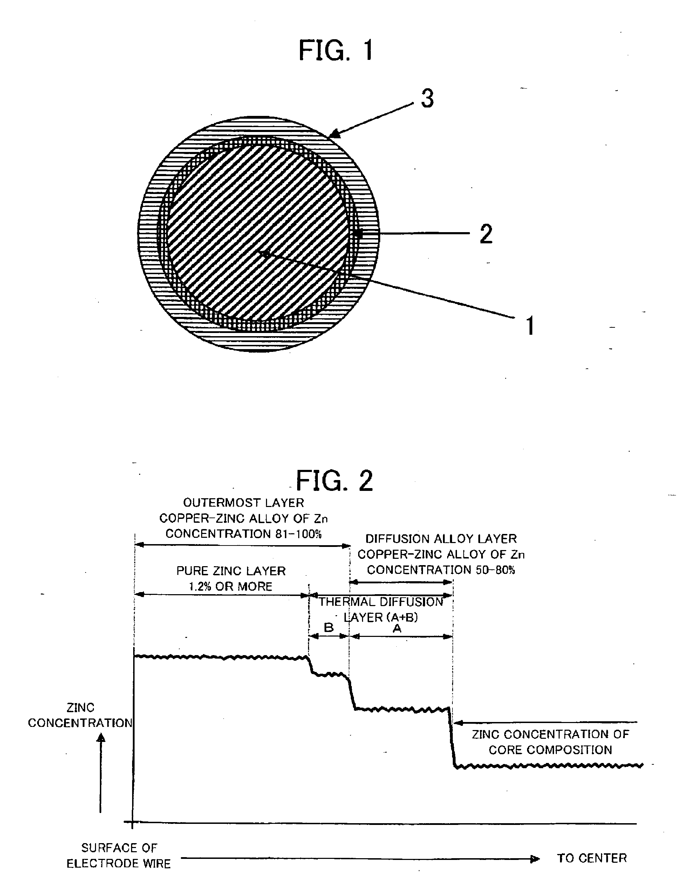

An electrode wire made using a system of the present invention includes a core 1 made of copper or copper alloy, a thermal diffusion layer 2, and a pure zinc layer 3, as shown in FIG. 1.
A method of manufacturing an electrode wire as described herein produces an electrode wire having the zinc concentration gradient in the radial direction of the electrode wire as shown in FIG. 2, provided that the composition of the copper or copper alloy of a core 6, its outer diameter, the temperature of the galvanizing bath, and the dipping time are properly selected.
Here, a non-oxidizing process is performed by blowing a non-oxidizing gas on the surface of the galvanizing bath to keep exposed the pure zinc bath surface to form a highly pure zinc layer on the core, then a wiping process is performed on the galvanizing layer to prevent oxidation of the surface of the galvanizing layer, runs and uneven thickness of the galvanizing layer, to produce a galvanized base wire, and then a cold wire-drawing is performed.

Accordingly, an electrode wire with no crazing or cracking on its surface after cold wire-drawing is obtained, because the outermost layer is coated with a relatively thick pure zinc layer having better malleability than the copper-zinc diffusion layer.
Such an electrode wire, with its uncracked outermost pure zinc layer, facilitates electrical discharge and thus improves the discharge stability, and, with its underlying copper-zinc alloy layer formed by thermal diffusion, increases the machining speed and reduces the generation of metal powder, improves the surface roughness of the workpiece, and provides better positionability.

The present invention will now be described more specifically with reference to the examples.

### [Electrode wire for electrodischarge machining]

### [First group of examples]

### (Examples Nos. 1-4)

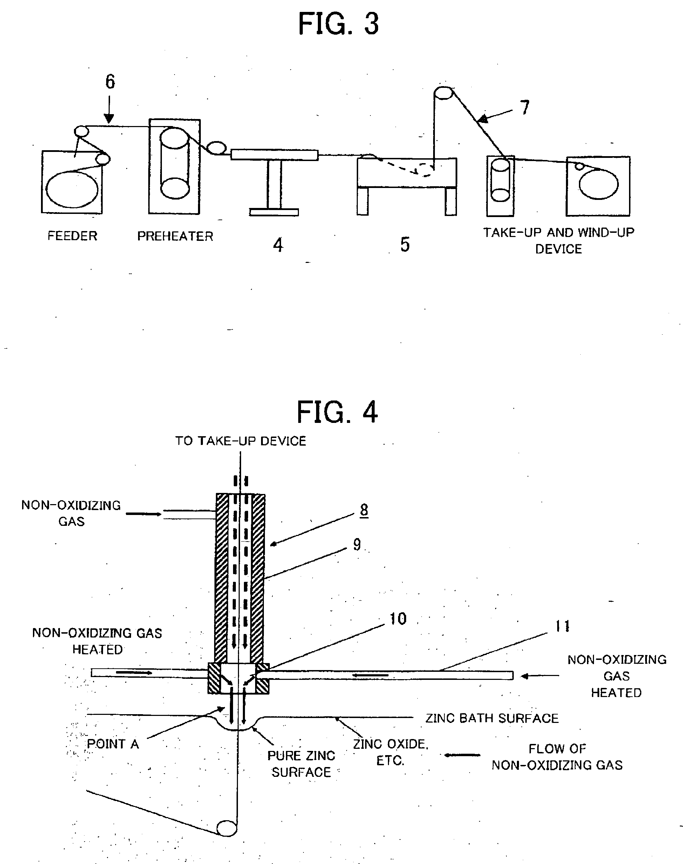

A 65/35 brass wire (65 weight % copper and 35 weight % zinc) of 1.2 mm in diameter produced through melting, casting, and drawing processes was used as the core 6. The core 6 was surface washed in a pickling-rinsing-flux bath 4 forming part of the hot-dip galvanizing device in FIG. 3. The core 6 was then passed through a galvanizing bath 5 holding pure zinc at 460° C, pulled up vertically in the galvanizing bath 5, and subjected to a wiping process to form a copper-zinc alloy layer by mutual thermal diffusion across the interface between the brass wire and the zinc. To find a range of dipping time in which a pure zinc layer is formed on the core 6, four types of galvanized base wires 7 were produced for the electrode wire by varying the dipping times 0.5 seconds, 0.7 seconds, 1.0 seconds, and 1.2 seconds.
Regarding the wiping process, a non-oxidizing process and a wiping process were performed to remove oxides on the bath surface and to prevent runs and uneven thickness of the galvanizing layer, with the bath surface zinc purifying and wiping device 8 disposed above the hot-dip galvanizing bath 5 as shown in the enlarged view in FIG. 4. In the non-oxidizing process, a non-oxidizing gas such as nitrogen gas and argon gas was blown on the galvanizing bath surface to remove oxides on the bath surface. Their details will he described later.
Next, the galvanized base wires 7 were cold drawn to produce electrode wires of 0.25 mm in diameter.
In all the examples including those described later and the comparative examples described later, a pure electrolytic zinc produced through electrolysis was used in the hot-dip galvanizing bath.

### [Second group of examples]

### (Examples Nos. 5 and 6)

Electrode wires of 0.25 mm in diameter were produced under the same conditions as the first group of examples described above, except that the temperature of the hot-dip galvanizing bath was set to 440°C and the dipping time was set to 0.5 seconds and 1 second.

### [Third group of examples]

### (Examples Nos. 7 and 8) -

Electrode wires of 0.25 mm in diameter were produced under the same conditions as the first group of examples described above, except that the temperature of the hot-dip galvanizing tank was set to 500°C and the dipping time was set to 0.5 seconds and 1 second, respectively.

### [First group of comparative examples]

### (Comparative examples Nos. 1-7)

Base wires were produced by galvanizing in the hot·dip galvanizing bath set to the same temperatures as the examples Nos. 1-7 above for longer dipping times set by slowing the take-up speed than that in the above examples, then performing a wiping process. The base wires were cold drawn to produce electrode wires of 0.25 mm in diameter.

### [Second group of comparative examples]

### (Comparative example No. 8)

A base wire was produced by galvanizing in the hot-dip galvanizing bath set to 520°C for the dipping time set to 1 second, and then by performing a wiping process. The base wire was cold drawn to produce an electrode wire of 0.25 mm in diameter.

The electrode wires produced in the examples Nos. 1-8 and comparative examples Nos. 1-8 were evaluated in the following points:
a. Characteristics of electrodischarge machining (machining speed, amount of generated metal powder, surface roughness of the workpiece, and positioning accuracy);
b. Thickness of the copper-zinc alloy layer formed by thermal diffusion across the interface between the core and molten zinc, and thickness of pure zinc layer: and
c. Presence of surface cracking.
The characteristics of electrodischarge machining were evaluated using a wire electrodischarge machine SX10 from Mitsubishi Electric under the machining conditions listed in Table 1 and in the manners listed in Table 2.
The evaluation results are shown in Table 3.

**[Table 1]**

| ITEM | CALIBRATION SETTING | REMARKS |
|---|---|---|
| VOLTAGE SELECTION | 12 | Selects an inter-electrode voltage in an unloaded condition. |
| MANUFACTURING SETTING | 11 | Selects a peak current between elelctrodes. |
| DOWNTIME | 1 | Selects a time length from end of discharge until voltage is applied again. |
| WIRE FEED RATE | 12 (12 m/min) | Selects a feed rate of the electrode wire for wire electrodischarge machining |
| WIRE TENSION | 11 (16N) | Selects a tension of the electrode wire for wire electrodischarge machining |
| SPECIFIC RESISTANCE OF MACHINING LIQUID | 9 (5.8×10⁴ Ω·cm) | Selects a specific resistance of machining liquid. |
| WORKPIECE | MATERIAL | SKD-11 |
| | THICKNESS | 60 mm |

**[Table 2]**

| CHARACTERISTICS ITEMS | EVALUATION METHOD |
|---|---|
| MACHINING SPEED | A cross-sectional area machined per unit time (machining speed multiplied by workpiece thickness) under the machining conditions in Table 1 is determined and expressed as a ratio to the machining speed (set as 1.00) of the electrode wire manufactured from a conventional 65/35 brass wire. |
| AMOUNT OF GENERATED METAL POWDER | When an electrode wire for wire electrodischarge machining runs without performing electrodischarge machining, the electrode wire is scraped against the guides on the wire running route and generates metal powder. This metal powder gradually piles up on the diamond die that restricts wire wobbling during machining, and the wire eventually fails to run and finally breaks. The evaluation of the amount of generated metal powder is alternatively expressed as the time until the wire breaks. |
| POSITIONING ACCURACY | Positioning is an operation performed while voltage is applied to find a point at which continuity occurs by moving the electrode wire for wire electrodischarge machining 1 µm at a time between the electrode wire and the workpiece. The point at which continuity occurs is set as a reference point. Reference points were measured 50 times under the machining conditions in Table 1 and the positioning accuracy is expressed as a standard deviation of the measured values. |
| SURFACE ROUGHNESS OF WORKPIECE | The surface roughness of the workpiece machined under the machining condition in Table 1 is measured using a surface roughness tester and expressed by the ten point average roughness (Rz) specified in JIS B0601 (1994). |

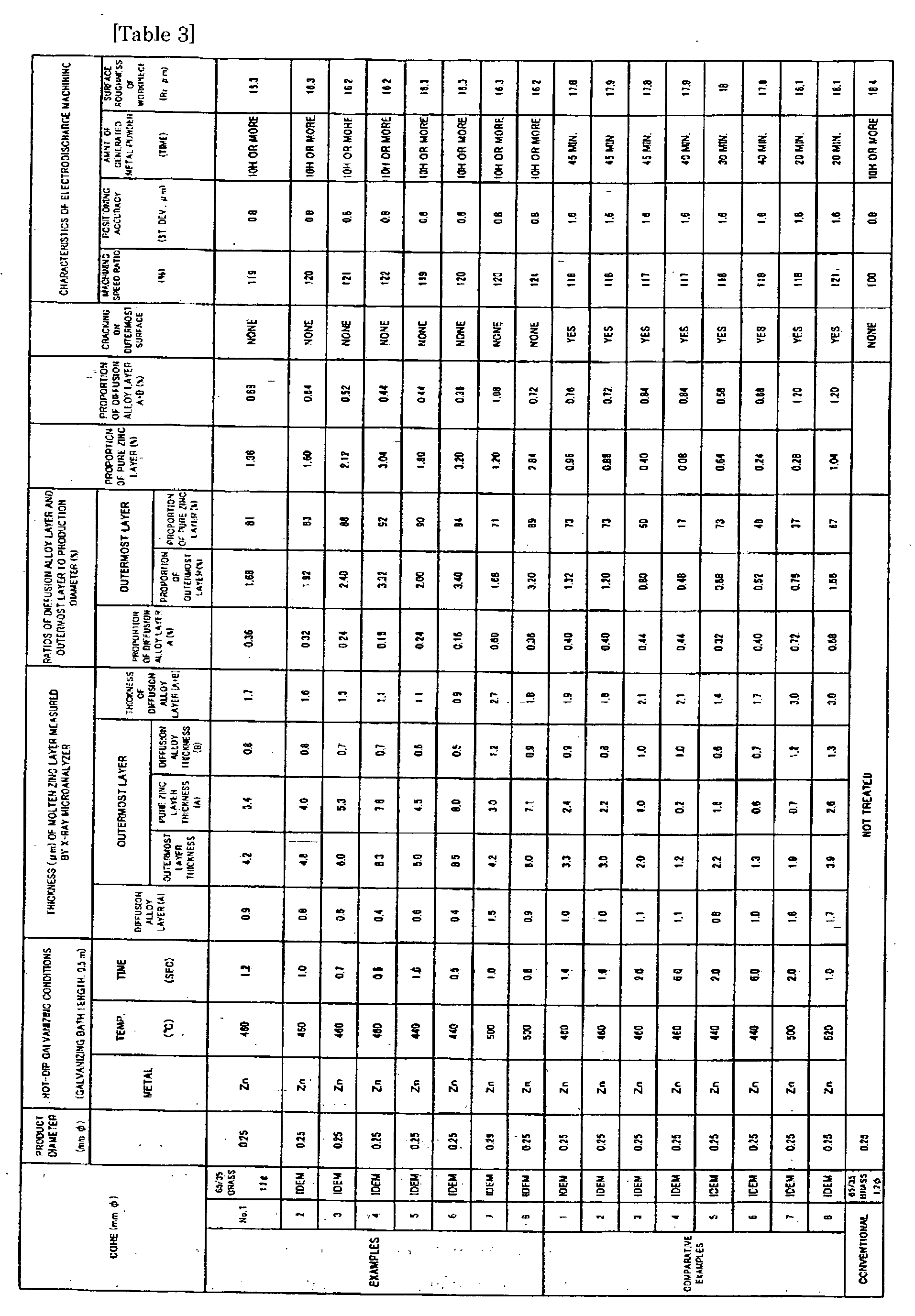

FIG. 1 is cross·sectional view of an electrode wire; FIG. 2 shows the zinc concentration in the radial direction of the electrode wire.
As shown in FIGs. 1 and 2, the surface of the electrode wires in examples Nos. 1·8 was composed of an outermost pure zinc layer containing 100% zinc, an underlying copper-zinc alloy layer of zinc concentration from 50 weight % to 100 weight % (exclusive) formed by thermal diffusion.

As shown in detail in Table 3, the outermost pure zinc layer has an average layer thickness of 3.0·8.0 µm constituting 1.2·3.2% of the outer diameter of the electrode wire.
This proportion significantly exceeds 0.08·1.04% of the comparative examples Nos. 1·8.

The thermal diffusion layer includes an inner copper-zinc alloy layer A of zinc concentration of 50-80 weight % formed by thermal diffusion of zinc into the core material 6, and an outer copper·zinc alloy layer B formed by thermal diffusion of the copper of the core material 6 into the molten zinc. The inner copper·zinc alloy layer A has an average layer thickness of 0.4-1.5 µm, while the outer copper-zinc alloy layer B has an average layer thickness of 0.5-1.2 µm.
The entire thermal diffusion layer A+B has an average layer thickness of 0.9-2.7 µm constituting 0.36-1.08% of the outer diameter of 0.25 mm of the electrode wire.

On the other hand, the thermal diffusion copper-zinc alloy layers A+B of zinc concentration from 50 weight % to 100 weight % (exclusive) in comparative examples Nos. 1-8 have an average layer thickness of 1.4-3.0 µm, which is slightly thicker than that in the examples, constituting 0.56-1.20% of the outer diameter of 0.25 mm of the electrode wire.
These thermal diffusion layers A+B have zinc concentration gradients gradually rising toward the surface of the electrode wire, i.e., from the core to the galvanizing layer, without the abrupt change in zinc concentration that appears at the interface between the electrogalvanizing layer and the core.

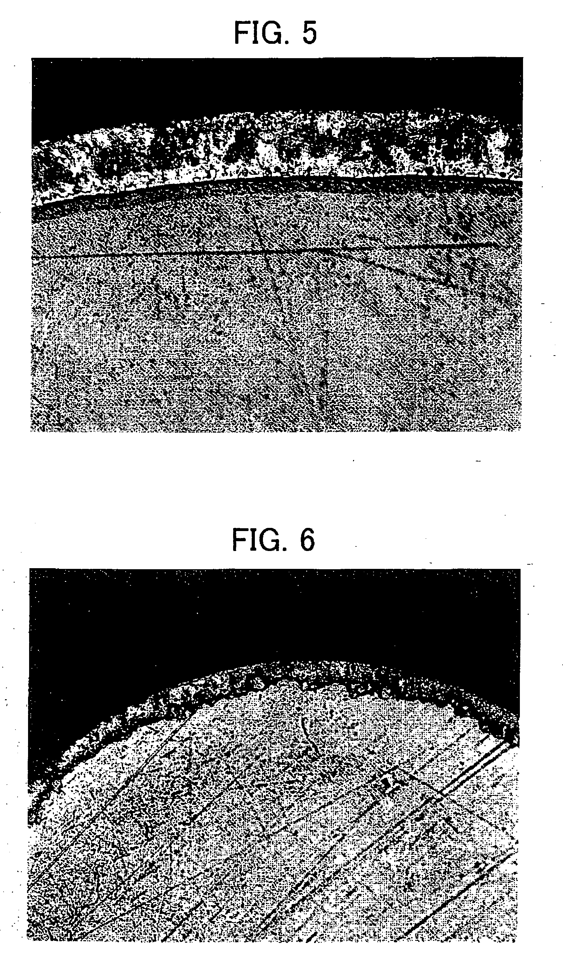

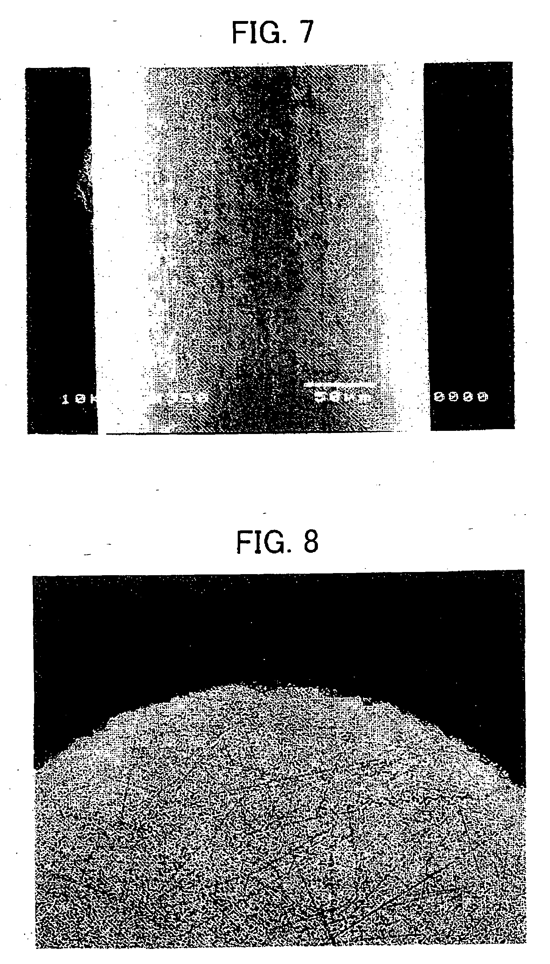

FIG. 5 is an optical micrograph of 1000 magnifications of a cross section of the galvanized base wire produced by hot-dip galvanizing a brass core in example No. 2; FIG. 6 is an optical micrograph of 1000 magnifications of a cross section of the electrode wire after cold drawn; and FIG. 7 is an electron microscope (SEM) image of a surface of the electrode wire after cold drawn.
As can be seen from these images, in example No. 2, the inner brittle copper-zinc alloy layer formed by thermal diffusion was enclosed with the pure zinc layer of high malleability, so no crazing or cracking was present on the surface of the electrode wire after cold drawn.

As can be seen from Table 3, the electrode wires in examples Nos. 1-4 improved the machining speed by approximately 20% compared with the conventional 65/35 brass electrode wire.
Regarding the surface roughness (ten point average roughness) of the workpiece, the electrode wire is also improved providing 16.2-16.3 µm, while the conventional 65/35 brass electrode wire provided 18.4 µm. This is because the electrode wire has a thick pure zinc layer which facilitates electrical discharge and thus improves the discharge stability.
Regarding the amount of generated metal powder and the positioning accuracy, the electrode wire is similar to the conventional 65/35 brass electrode wire.

As can be seen from Table 3, similarly to the first group of examples Nos. 1-4, in examples Nos. 5-6 in which the hot-dip galvanizing bath temperature was set to 440°C, which was 20°C lower than that of the first group of examples Nos. 1-4, and the dipping times were set to 1 second and 0.5 seconds, respectively, the copper-zinc alloy layers A+B formed by thermal diffusion across the interface between the brass core and the molten zinc have an average layer thickness constituting approximately 0.4% of the outer diameter of the electrode wire, and the pure zinc layers on the thermal diffusion layers have an average layer thickness constituting 1.8-3.2% of the outer diameter of the electrode wire, with no crazing or cracking present on the surface of the electrode wire after cold drawn.
The characteristics of electrodischarge machining were the same as those of the first group of examples; the machining speed was improved by approximately 20% compared with the conventional 65/35 brass electrode wire; and the surface roughness of the workpiece was improved from 18.4 µm to 16.3 µm.

As can be seen from Table 3, similarly to the first group of examples, in examples No. 7-8 in which the molten zinc temperature was set to 500°C, which was 40°C higher than the first group of examples, and the dipping times were set to 1 second and 0.5 seconds, respectively, the copper-zinc alloy layers formed by thermal diffusion across the interface between the brass core and the molten zinc have an average layer thickness constituting approximately 0.72-1.08% of the outer diameter of the electrode wire, and the pure zinc layers on the thermal diffusion layers have an average layer thickness constituting 1.20-2.84% of the outer diameter of the electrode wire, with no crazing or cracking present on the surface of the electrode wire after cold drawn.
The characteristics of electrodischarge machining were the same as those of the first group of examples; the machining speed was improved by approximately 20% compared with the conventional 65/35 brass electrode wire; and the surface roughness of the workpiece was improved from 18.4 µm to 16.2-16.3 µm.

The electrode wire produced as the comparative example 1 was also evaluated in the same manner as for those in the examples. The evaluation results are shown in Table 3.
As can be seen from Table 3, in comparative examples Nos. 1-6 in which the dipping times were 1.4-6.0 seconds, which were longer than those of the examples with the same hot-dip galvanizing bath temperature, the copper-zinc alloy layers formed by thermal diffusion were thicker and the pure zinc layers were thinner.
In particular, in comparative example No. 1 in which the dipping time was set to 1.4 seconds, in contrast to 1.2 seconds in the example No. 1, while the galvanizing bath temperature was the same as in the example No. 1, the thickness of the pure zinc layer critically changed and crazing and cracking occurred.

FIG. 8 is an optical microphotography of 1000 magnifications of a cross section of the electrode wire in comparative example No.1; FIG. 9 is an electron microscope (SEM) image of 350 magnifications of a surface of the electrode wire in comparative example No. 1.
As can be seen from these images, the pure zinc layer with good malleability of the electrode wire in comparative example No. 1 is thin, with crazing and cracking on the surface of the electrode wire after cold drawn.

Next, the characteristics of electrodischarge machining of the electrode wires in the examples will be compared with those of the comparative examples. The machining speed is improved by approximately 20% compared with the conventional 65/35 brass electrode wire. The pure zinc layer with good malleability is thicker than the thermal diffusion layer, with no crazing or cracking on the surface of the electrode wires. The amount of generated metal powder is accordingly improved from 20-45 minutes to 10 hours or more, the positioning accuracy is improved from 1.6 µm to 0.8 µm, and the surface roughness of the workpiece is improved from 17.8-18.1 µm to 16.2-16.3 µm.

Furthermore, the electrode wires produced as the second group of comparative examples were evaluated and compared with the electrode wires in the examples. The evaluation results are shown in Table 3. As can be seen from Table 3, in comparative example No. 7, in which the hot-dip galvanizing bath temperature was set to 500°C and the dipping time was set to 2 seconds, well above 1.2 seconds, and in comparative example No. 8, in which the hot-dip galvanizing bath temperature was higher than 520°C, the pure zinc layers with good malleability were thinner and the brittle alloy layers were thick, with crazing and cracking present on the surface of the electrode wire after cold drawn, compared with the examples Nos. 2, 5, and 7 in which the galvanizing bath temperatures were set to 500°C or less, and compared with the examples in which the dipping times were set to 1 second.
The characteristics of electrodischarge machining in comparative examples Nos. 7, 8 are similar to those in comparative examples Nos. 1-6, because of crazing and cracking present on the surface of the electrode wires. Compared with the examples, the amount of generated metal powder, positioning accuracy, and the surface roughness of the workpiece are extremely worse.
Although the 65/35 brass electrode wire is used as the conventional electrode wire in the above comparison, an electrogalvanized electrode wire may be used instead. The electrogalvanized electrode wire has only a zinc layer, with no thermal diffusion layer in which the zinc concentration gradually rises from the core toward the galvanizing layer, so the zinc concentration abruptly changes at the interface between the electrogalvanizing layer, and the core. Accordingly, it provides good discharge stability and thus good surface roughness, but cannot achieve the increase in the electrodischarge machining speed, because the zinc is quickly consumed due to its low melting point.
Compared with hot-dip galvanizing, electrogalvanizing is slow in galvanizing speed, so it cannot form a thick galvanizing layer in a single galvanizing cycle and requires a plurality of galvanizing cycles, leading to a higher cost of manufacturing.

### [Method of manufacturing]

As can be seen from the results of these examples and comparative examples, it is possible to change the thickness of the copper-zinc alloy layer formed by thermal diffusion and the thickness of the pure zinc layer by adjusting the hot-dip galvanizing bath temperature and the dipping time. These are interrelated as follows:
(1) Thermal diffusion layer (copper-zinc alloy layer)
   - The thermal diffusion alloy layer becomes thinner when the dipping time is shorter as long as the temperature is the same.
   - The thermal diffusion alloy layer becomes thinner when the temperature is lower as long as the dipping time is the same.
(2) Pure zinc layer
   - The pure zinc layer becomes thicker when the dipping time is shorter as long as the temperature is the same.
   - The pure zinc layer becomes thicker when the temperature is lower as long as the dipping time is the same.

The method of manufacturing an electrode wire as described herein was formulated on the basis of the above findings. With this method, an electrode wire for electrodischarge machining can be produced with its thermal diffusion layer thickness, zinc concentration gradient, and outermost pure zinc layer thickness adjusted as desired, without complicated processes, simply by selecting the hot-dip galvanizing bath temperature and dipping time as appropriate. The produced electrode wire has no crazing or cracking on its surface and provides excellent characteristics of electrodischarge machining.

As described above, the inventors also found from the results of these examples and comparative examples that a thicker pure zinc layer and a thicker pure zinc layer than the thermal diffusion layer are factors effective for preventing crazing and cracking on the surface of the electrode wire.
Accordingly, the basic principles of the manufacturing method described herein are to form a thicker pure zinc layer by limiting the dipping time of the core in the hot-dipping galvanizing bath within a predetermined time, and to form a thinner thermal diffusion layer by limiting the hot-bath galvanizing temperature below a predetermined temperature.

### [Manufacturing system]

An embodiment of the manufacturing system of the present invention will be described with reference to FIGs. 3 and 4.
Referring to FIG. 3, a bath surface zinc purifying and wiping device 8 (not shown) including a wiping pipe 9 and a jet blow device 10 (shown in an enlarged view in FIG. 4) is disposed above the rear portion of a hot-dip galvanizing bath 5 where the core is pulled out of the bath.

The bath surface zinc purifying and wiping device 8 has two features: firstly, making 100% the zinc concentration of the galvanizing layer formed on the core, and, secondly, preventing runs or uneven thickness of the formed pure zinc layer.

The first feature is implemented by disposing a jet blower 10 with its jet tip facing the bath surface through which the core emerges from the hot-dip galvanizing bath and by blowing a non-oxidizing gas through the jet tip to remove a layer of impurities including oxide film and products of reaction with flux and keep exposed the pure zinc bath surface.
The second feature is implemented by crashing a non-oxidizing gas at high speed the core in jet blower 10 of the bath surface zinc purifying and wiping device 8 and by passing a non-oxidizing gas at high speed around the core in the hollow wiping pipe 9 in the direction opposite to the core take-up direction.

The wiping section includes the hollow wiping pipe 9 of 100 mm in length and 18 mm in inner diameter, a heater heated to 600°C, and a gas supplying device supplying a non-oxidizing gas, such as nitrogen gas and argon gas, from top of the wiping pipe 9. While passing through the wiping pipe 9, the non-oxidizing gas is heated by the heater, so the temperature at point A reaches or exceeds the melting point of zinc, for example 420°C.
The wiping pipe 9 is connected at its bottom to the jet blower 10 composing a zinc purifying section. The jet blower 10 is a pipe of 15 mm in length and 9.6 mm in inner diameter. A plurality of gas supplying pipes 11 are connected in the radial direction to the wall of the pipe, through which the non-oxidizing gas heated to the above temperature is supplied.

The non-oxidizing gas flowing through the gas supplying pipes 11 toward the center of the jet blower 10 meets the affluent flow of non-oxidizing gas flowing downward inside the wiping pipe 9, is redirected downward, and is blown on the bath surface through which the core emerges from the hot-dip galvanizing bath 5 to remove by wind pressure the zinc oxides and flux films formed on the bath surface and keep exposed the pure zinc bath surface, thus keeping the bath surface.
With this action, this device makes 100% pure the pure zinc layer formed on the surface of the electrode wire.
In the device in this embodiment, a gas flow rate of 20 ml or more is assured at the outlet of the jet blower 10 to expose the pure zinc bath surface.

Inside the jet blower 1-0, the gas flow supplied by the above gas supplying device, heated by the heater, and flowing downward inside the wiping pipe 9 and the gas flow flowing through the above gas supplying pipes 11 toward the center make uniform the thickness of the galvanizing layer on the core surface taken up from the hot-dip galvanizing bath 5, preventing runs and uneven thickness.

Above the wiping pipe 9, a commonly-used forced cooling section (not shown) is disposed to immediately cool the galvanized base wire by a non-oxidizing gas or air, so the galvanized base wire does not damage in the next take-up process.

With the above processes, a base wire for electrode wire for electrodischarge machining can be produced, with an outermost pure zinc layer thicker than the underlying thermal diffusion layer and with no crazing or cracking.
This base wire is cold drawn into a product. In this cold wire-drawing process, the base wire is reduced in diameter, with the same layer structure and with the same layer thickness proportions.
Accordingly, an electrode wire for wire electrodischarge machining can be easily produced with no crazing or cracking on its surface, as long the layer structure and layer thickness proportions are strictly controlled when the base wire is produced.
From this reason, a similar quality can be achieved with an electrode wire of any outer diameter, such as 0.1-0.3 mm, although the electrode wire of 0.25 mm in outer diameter is shown as the finished product in the above examples and comparative examples.

## Claims

1. A system for manufacturing a base wire for an electrode wire for wire electrodischarge machining by forming a hot-dip galvanized pure zinc layer on a preheated core made of copper or copper alloy by dipping the core (1) in a hot-dip galvanizing bath (5), the system **characterized by** comprising:
a bath surface zinc purifying and wiping device (8), configured with
a wiping pipe (9) through which the core (1) with zinc on a surface is taken up,
a gas supplying device that supplies a non-oxidizing gas to the top of the wiping pipe (9) so as to flow downward inside the wiping pipe, and
a jet blower (10) that is connected at a bottom of said wiping pipe (9), the jet blower having a pipe to which a plurality of non-oxidizing gas supplying pipes (11) is mounted radially, and having a jet tip located facing the bath surface through which the core (1) emerges from said hot-dip galvanizing bath (5),
wherein said bath surface zinc purifying and wiping device (8) is configured to blow the non-oxidizing gas supplied to said wiping pipe (9) by said gas supplying device and to blow a non-oxidizing gas supplied from said non-oxidizing gas supplying pipes (11) onto the bath surface, of zinc, of said hot-dip galvanizing bath (5) from the jet tip of said jet blower (10), so as to thereby remove layers of zinc oxide and impurities formed on the bath surface of molten zinc with wind pressure to expose a surface of pure zinc, and to thereby make uniform a thickness of the hot-dip galvanized layer on the core surface taken up from said hot-dip galvanizing bath (5) to prevent runs and uneven thickness.

## Patentansprüche

1. System zur Herstellung eines Basisdrahts für einen Elektrodendraht zur funkenerosiven Drahtbearbeitung durch Bildung einer galvanisierten, reinen Feuerzinkschicht auf einem vorgeheizten Kern aus Kupfer oder Kupferlegierung durch Eintauchen des Kerns (1) in ein Feuergaivanisierungsbad (5), wobei das System **dadurch gekennzeichnet ist, dass** es umfasst:
eine Vorrichtung (8) zum Reinigen und Abstreifen des Badoberflächenzinks, ausgestattet mit
einem Abstreifrohr (9), durch welches der Kern (1) mit Zink an einer Oberfläche aufgenommen wird,
einer Gasliefervorrichtung, die ein nicht oxidierendes Gas an die Oberseite des Abstreifrohrs (9) liefert, so dass es nach unten in das Abstreifrohr fließt, und
ein Strahlgebläse (10), das an einer Unterseite des Abstreifrohrs (9) angeschlossen ist, wobei das Strahlgebläse ein Rohr hat, an das eine Anzahl Lieferrohre für nicht oxidierendes Gas (11) radial angebracht sind, und mit einer Düse, die sich gegenüber der Badoberfläche befindet, und durch welche der Kern (1) aus dem Feuergalvanisierungsbad (5) erscheint,
wobei die Vorrichtung (8) zum Reinigen und Abstreifen des Badoberflächenzinks ausgelegt ist zum Blasen des von der Gasliefervorrichtung an das Wischrohr (9) gelieferten nicht oxidierenden Gases und zum Blasen eines von den Lieferrohren für nicht oxidierendes Gas (11) gelieferten nicht oxidierenden Gases auf die Badoberfläche, aus Zink, des Feuergalvanisierungsbads (5) aus der Düse des Strahlgebläses (10), so dass **dadurch** auf der Badoberfläche des geschmolzenen Zinks gebildete Zinkoxydschichten und Verunreinigungen mit Winddruck entfernt werden, um eine Oberfläche reinen Zinks freizulegen, und dass **dadurch** eine Stärke der galvanisierten Feuerzinkschicht auf der aus dem Feuergalvanisierungsbad (5) aufgenommenen Kernoberfläche gleichmäßig gemacht wird, um Einbrüche und ungleichmäßige Stärke zu verhindern.

## Revendications

1. Système de fabrication d'un fil de base destiné à un fil d'électrode pour décharge électrique par fil en formant une couche de zinc pur galvanisé par immersion à chaud sur un noyau préchauffé composé de cuivre ou d'alliage de cuivre en plongeant ledit noyau (1) dans un bain de galvanisation par immersion à chaud (5), le système étant **caractérisé en ce qu'**il comprend :
un dispositif de purification et de raclage du zinc à la surface du bain (8), configuré avec
un tuyau de raclage (9) par lequel est sorti le noyau (1) ayant du zinc à la surface,
un dispositif d'alimentation en gaz qui fournit un gaz non oxydant à la partie supérieure du tuyau de raclage (9) de façon à ce qu'il circule vers le bas à l'intérieur du tuyau de raclage, et
un système de pulvérisation (10) qui est relié au niveau d'une partie inférieure dudit tuyau de raclage (9), ledit système de pulvérisation ayant un tuyau sur lequel sont montés radialement plusieurs tuyaux d'alimentation en gaz non oxydant (11), et ayant une extrémité de pulvérisation située en face de la surface du bain, par laquelle le noyau (1) émerge dudit bain de galvanisation par immersion à chaud (5),
dans lequel ledit dispositif de purification et de raclage du zinc à la surface du bain (8) est configuré pour projeter le gaz non oxydant fourni audit tuyau de raclage (9) par ledit dispositif d'alimentation en gaz, et pour projeter un gaz non oxydant fourni par lesdits tuyaux d'alimentation en gaz non oxydant (11) vers la surface du bain, en zinc, dudit bain de galvanisation par immersion à chaud (5), depuis l'extrémité de pulvérisation dudit système de pulvérisation (10), de façon à éliminer les couches d'oxyde de zinc et les impuretés formées sur la surface du bain en zinc fondu, à l'aide de la poussée du vent, afin d'exposer une surface en zinc pur, et de rendre ainsi uniforme l'épaisseur de la couche galvanisée par immersion à chaud à la surface du noyau sorti dudit bain de galvanisation par immersion à chaud (5), de façon à empêcher les coulures et toute épaisseur irrégulière.
